# EUROPÄISCHE PATENTANMELDUNG

(11) **EP 0 600 275 A1**
(43) Veröffentlichungstag der Anmeldung: **08.06.1994**
(21) Anmeldenummer: 93118203.4
(22) Anmeldetag: 10.11.1993
(51) Int. Cl.: A47J 9/00, B26B 27/00, B26D 1/553, B26D 3/24

(54) **Lehre zum Butterschneiden**

(30) Priorität: 10.11.1992 DE 9215305 U
(71) Anmelder: Grasmann, Lorenz, D-83607 Holzkirchen (DE)
(72) Erfinder: Grasmann, Lorenz, D-83607 Holzkirchen (DE)
(74) Vertreter: Abitz, Walter, Dr.-Ing.

(57) **Zusammenfassung**

Lehre zum Butterschneiden, die einen Rahmen (1), über den mindestens ein Führungsdraht (2) gespannt ist, aufweist.

## Beschreibung

Die Erfindung betrifft eine Lehre zum Butterschneiden.

Butter läßt sich üblicherweise nur dann auf eine Scheibe Brot oder eine aufgeschnittene Semmel problemlos aufstreichen, wenn die Butter nahezu Raumtemperatur hat. Butter die unmittelbar aus dem Kühlschrank genommen wird, ist zu hart, und läß sich nur mühsam aufstreichen. Um von einer harten Butter eine verstreichbare Portion abzuschneiden, hat man nur die Wahl, entweder mit dem Messer Butterstücke abzuschaben, was zu sehr unschönen Vertiefungen in der Butter führt, oder zu versuchen, von einer Seite ein dünnes Stück abzuschneiden, was jedoch meist mißlingt, da sich von Hand eine konstante Dicke des abgeschnittenen Butterstücks nicht einhalten läßt. Üblicherweise wird die Butter daher einige Zeit, bevor sie tatsächlich benötigt wird, aus dem Kühlschrank genommen, damit sie sich etwas erwärmen kann. Butter sollte jedoch nicht unnötig lange bei Raumtemperatur gehalten werden, da sie dann an Geschmack verliert.

Der Erfindung liegt die Aufgabe zugrunde, eine Möglichkeit zu schaffen, mit der auch frisch aus dem Kühlschrank genommene Butter, also relativ harte Butter, problemlos aufgestrichen werden kann.

Erfindungsgemäß wird diese Aufgabe durch eine Lehre gelöst, die einen Rahmen aufweist, über den mindestens ein Führungsdraht gespannt ist.

Die erfindungsgemäße Lehre wird auf eine Seite eines quaderförmigen Butterstückes gelegt und mit geringer Kraft in die Butter eingedrückt. Auf der Lehre wird dann ein Messer mit der Schneide voraus unter einem flachen Winkel von z.B. 10° angesetzt und über die betreffende Seite der Butter gezogen. Die Einschnittiefe des Messers wird dabei durch den Führungsdraht begrenzt. Der Führungsdraht wird dabei etwas in die Butter eingedrückt, so daß das Messer eine dünne Butterschicht abhebt. Die Stärke der Butterschicht hängt dabei von der Kraft ab, mit der das Messer gegen den Führungsdraht gedrückt wird und ist daher wählbar. Durch den Führungsdraht wird gleichsam eine Führung gebildet, so daß die abgeschnittene Butterscheibe eine gleichmäßige Stärke hat, und zwar unabhängig von den unvermeidlichen Schwankungen der Kraft mit der die Hand das Messer führt.

Vorzugsweise sind über dem Rahmen zwei oder drei Führungsdrähte gespannt und mindestens ein dazu quer verlaufender Draht. Dadurch wird erreicht, daß das abgeschnittene Butterstück nicht nur in Schnittrichtung gleichbleibende Stärke hat, sondern auch in Querrichtung. Der Querdraht sorgt dabei dafür, daß alle Führungsdrähte etwa gleich weit in die Butter eingedrückt werden, daß die Lehre also nicht nach der einen oder anderen Seite kippt. Zusätzlich dient der Querdraht als Anschlag, damit die Lehre nicht verrutscht, wenn sie nicht festgehalten wird, also bei Einhandbedienung.

Vorzugsweise ist der Rahmen rechteckförmig, wobei sich an den kurzen Seiten des Rechteckes aus der Rahmenebene nach oben abgesetzte Griffe befinden. Diese Griffe dienen als Abrutschschutz und sollen Schnittverletzungen verhindern.

Um die Führungsdrähte gespannt zu halten, sind vorzugsweise die zu den Führungsdrähten parallel laufenden Rahmenseiten geknickt oder leicht gebogen ausgeführt und stehen unter der durch die Führungsdrähte erzeugten Spannung.

Zur Bildung der Griffe sind die entsprechenden Rahmenteile vorzugsweise torartig aus der Rahmenebene abgesetzt. An der Grundlinie der Tore sind die Rahmenseiten dabei durch einen gespannten Basisdraht fortgeführt, der durch denselben fortlaufenden Draht wie die Führungsdrähte gebildet wird. Die Mittelpunkte der beiden Basisdrähte sind dabei durch einen Führungsdraht verbunden, so daß alle Führungsdrähte miteinander in Verbindung stehen und gleichmäßig gespannt sind.

Zur weiteren Vereinfachung der Handhabung der erfindungsgemäßen Lehre weist diese vorzugsweise ein Gestell auf, in dem unterhalb des Rahmens eine Butterauflage höhenverstellbar geführt ist. Die Führung kann dabei durch zwei Säulen erfolgen, die in einem solchen Abstand angeordnet sind, daß sie zwischen sich eine handelsübliche Butterportion aufnehmen können, und die sich durch Öffnungen in der Butterauflage erstrecken. Damit die Butter selbsttätig von unten gegen den Rahmen mit den Führungsdrähten gedrückt wird, wird die Butterauflage vorzugsweise durch Schraubendruckfedern nach oben gedrückt, wobei Zahnstangen an den Enden der Butterauflage angreifen und im Ruhezustand eine Bewegung der Butterauflage nach oben blockieren. Die Zahnstangen sind zur Seite verschwenkbar, so daß sie die Butterauflage freigeben. Das Zurseiteschwenken der Zahnstangen kann dabei durch Ausklinkhebel bewirkt werden, deren Betätigungsende über den Rahmen vorsteht, so daß sie beim Abschneiden einer Butterscheibe zwangsläufig betätigt werden.

Die Butterauflage kann auch durch einen Seilzug oder einen anderen Hubmechanismus nach oben gedrückt werden und an den Wandteilen statt an den Säulen geführt sein.

Zum Frischhalten der Butter können ferner eine abnehmbare Ummantelung und eine getrennt abnehmbare Abdeckung vorgesehen sein, wobei in den Seitenwänden der Ummantelung Kältespeicher eingebaut sind.

Nach einer besonders bevorzugten Ausgestaltung der Erfindung ist der Rahmen höhenverschiebbar über einer Auflage geführt. Die Butterauflage ist hierbei stationär. Das Butterstück wird auf die Auflage gelegt. Der Rahmen weist zur Abstützung an seinen Enden nach unten zeigende Führungslaschen auf, die vertikal verschiebbar in Zwischenführungen geführt sind, die wiederum in jeweils an den Schmalseiten der Auflage ausgebildeten Führungstaschen geführt sind. Die Führungstaschen stehen von der Auflage nach unten ab und die Außenseite der

Führungstaschen kann gleichzeitig die Füße der Auflage bilden. Durch die Zwischenführung wird eine flexible Abstützung des Rahmens über der Auflage erzielt, die auch bei einem Verkanten der Führungslaschen und der Zwischenführung nicht klemmt.

Ausführungsbeispiele der Erfindung werden nachfolgend anhand der Zeichnung erläutert. Es zeigen:
- Fig. 1: die Lehre zum Butterschneiden in einer perspektivischen Darstellung;
- Fig. 2: die Lehre zum Butterschneiden mit einem Gestell zur Aufnahme der Butter;
- Fig. 3: ein Ausführungsbeispiel ähnlich dem von Fig. 2, wobei zusätzlich eine Ummantelung und eine Abdeckung vorgesehen ist;
- Fig. 4: ein weiteres Ausführungsbeispiel, bei dem der Rahmen vertikal verschieblich über einer Auflage geführt ist und
- Fig. 5: ein Detail von Fig. 4.

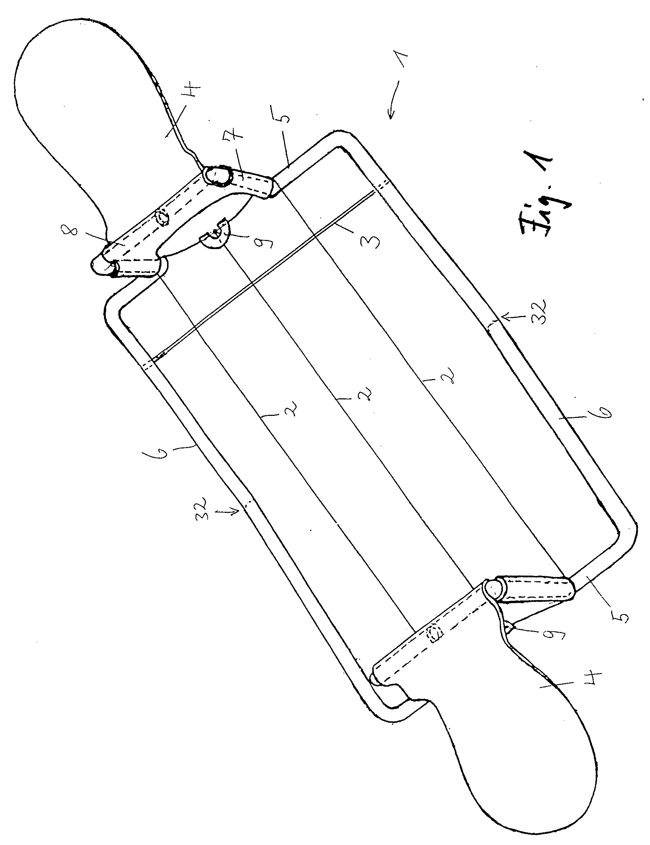

Fig. 1 zeigt eine Lehre zum Butterschneiden, die einen rechteckförmigen Rahmen 1 mit zwei kurzen Seiten 5 und mit zwei langen Seiten 6 aufweist. Drei Führungsdrähte 2 sind zwischen den kurzen Seiten 5 gespannt. Ein Querdraht 3 verläuft quer dazu in geringem Abstand von einer kurzen Seite 5 und liegt unter den Führungsdrähten 2.

An den kurzen Seiten des Rahmens 1 sind Griffe 4 mit Laschen vorgesehen, wozu die kurzen Seiten 5 des Rahmens 1 im Mittelbereich aus der Rahmenebene heraus gekröpft sind. Die Kröpfungen bestehen aus kurzen senkrecht zur Rahmenebene stehenden Teilen 7, deren obere Enden durch ein waagrechtes Teil 8 verbunden sind. Die Grifflaschen können ebenfalls aus dem Draht des Rahmens gebogen sein. Die beiden äußeren Führungsdrähte 2 werden dabei durch einen einzigen Draht gebildet, der um die Fußpunkte der senkrechten Teile 7 geführt ist und dessen Enden unterhalb eines der Griffe 4 mittels einer Klemmscheibe 9 oder eines Pressnippels verbunden sind. Unterhalb des anderen Griffes 4 befindet sich auf dem Draht ebenfalls eine Klemmscheibe 9. Zwischen beiden Klemmscheiben 9 ist der mittlere Führungsdraht 2 gespannt, so daß alle Führungsdrähte 2 untereinander verbunden sind und sich deren Spannung ausgleicht. Die Spannung in den Führungdrähten 2 ist sehr hoch und die längeren Seiten 6 des rechteckigen Rahmens 1 sind in der Mitte 32 leicht geknickt oder bogenförmig ausgebildet, damit die Spannung der Führungsdrähte 2 erhalten bleibt. Damit wird gleichzeitig verhindert, daß die Messerschneide die längeren Seiten 6 des Rahmens 1 berührt.

Der Rahmen 1 ist aus Edelstahldraht von 4 mm Durchmesser geformt und die Führungsdrähte sind ein Edelstahldraht von 0,5 mm. Der Querdraht 3 besteht ebenfalls aus Edelstahl und hat einen Durchmesser von 1 mm.

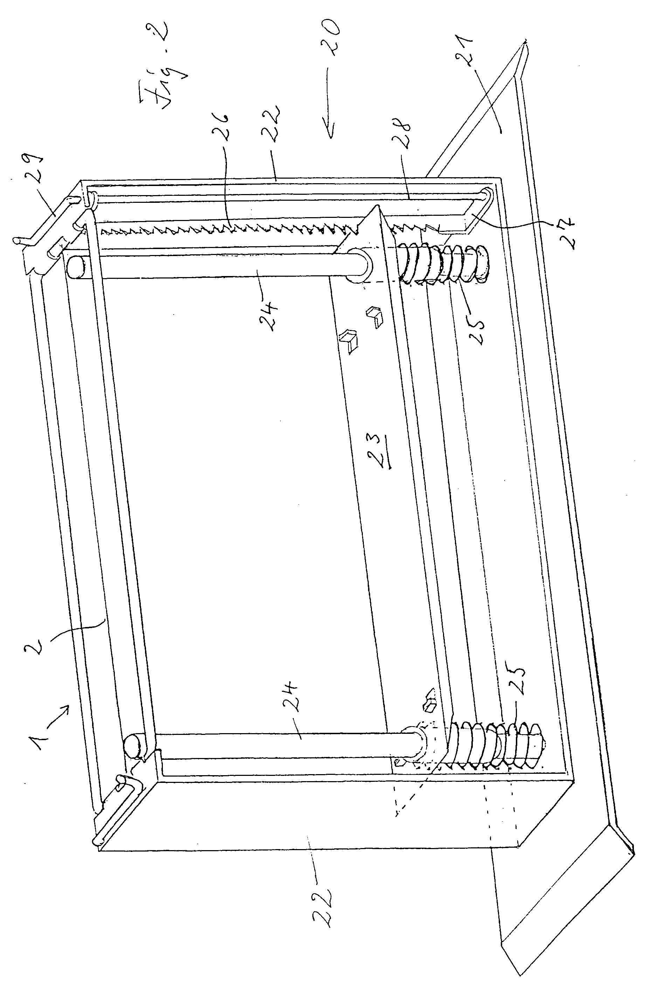

Die in Fig. 2 dargestellte Lehre zum Butterschneiden besteht aus einem Gestell 20 mit einer Bodenplatte 21 und zwei im Abstand angeordneten senkrecht stehenden Wandteilen 22. Zwischen den Wandteilen 22 ist eine Butterauflage 23 waagrecht auf zwei Säulen 24 geführt. Unterhalb der Butterauflage 23 sitzen auf den Säulen 24 Schraubendruckfedern 25, die sich an der Bodenplatte 21 abstützen und die Butterauflage 23 nach oben drücken. Die Oberkanten der Wandteile 22 sind waagrecht abgewinkelt und halten den Rahmen 1 mit einem einzigen mittig und parallel zu den längeren Seiten 6 des Rahmenrechtecks verlaufenden Führungsdraht 2. Zwischen jeder Säule 24 und dem jeweiligen Wandteil 22 sind verschwenkbare Zahnstangen 26 mit nach unten zeigenden Sägezähnen angeordnet, die an den schmalen Enden der Butterauflage 23 angreifen und gegen die Kraft der Schraubendruckfedern 25 arretieren. Die Zahnstangen 26 sind durch kurze Arme 27 um eine seitlich versetzt liegende Drehachse verschwenkbar an einer Stange 28 befestigt, die an der Oberseite zu einem Kurbelarm 29 abgewinkelt ist.

Die in Fig. 2 gezeigte Lehre zum Butterschneiden wird in der Weise verwendet, daß die Butterauflage 23 von Hand nach unten gedrückt wird und eine Butterportion mit handelsüblichen Abmessungen hochkant auf die Butterauflage gelegt wird. Durch kurzes Verschwenken der Zahnstangen 26, wozu die Kurbelarme z.B. mit einem Messer nach außen gedrückt werden, wird die Butterauflage 23 von den Zahnstangen 26 gelöst, so daß sie die Butterprtion nach oben gegen den Rahmen 1 anheben kann, wobei sich der Führungsdraht 3 etwas in die Oberseite der Butter eindrückt. Mit einem entlang des Führungsdrahtes 2 über den Rahmen 1 gezogenen Messer kann dann eine gleichmäßig dünne Butterscheibe abgeschnitten werden. Die Butterscheibe ist dabei so dünn, daß sie auf der Brotscheibe oder der Semmelhälfte kaum noch verstrichen werden muß.

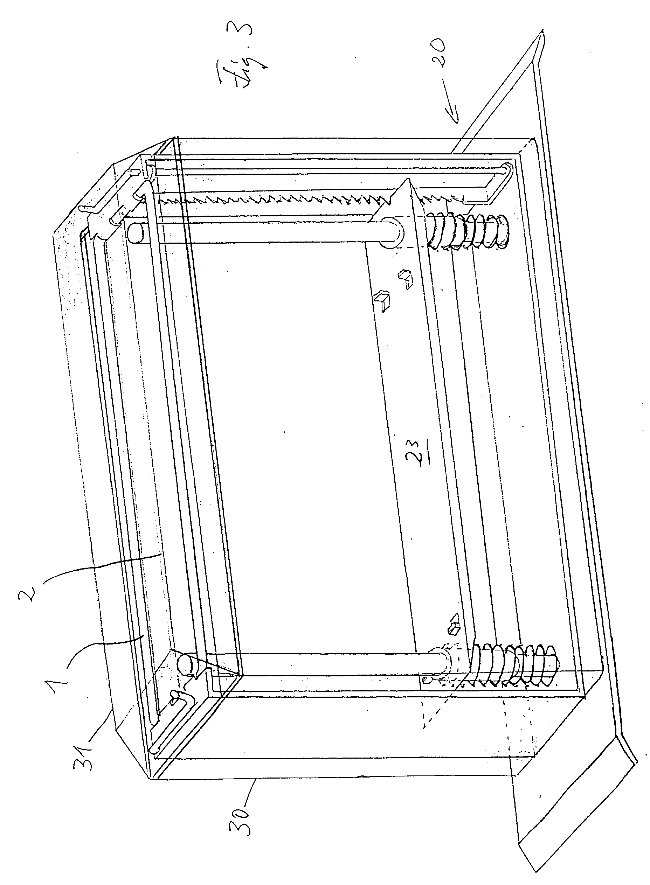

Gemäß Fig. 3 kann um das Gestell 20 von Fig. 2 eine Ummantelung 30 mit einer Abdeckung 31 angebracht werden, durch die ein zu rasches Erwärmen der Butter verhindert wird. In der Ummantelung 30 können Kältespeicher in Form von Wassertaschen oder Materialauflagen mit hoher Wärmekapazität vorgesehen sein.

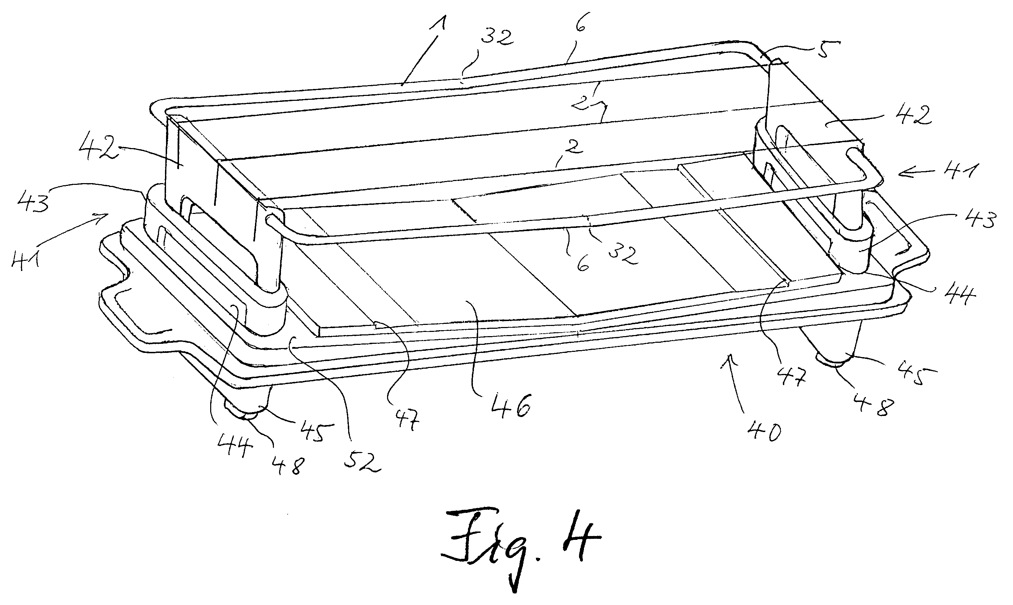

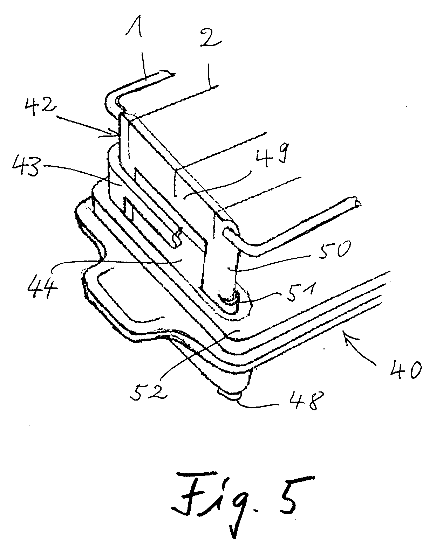

Bei dem Ausführungsbeispiel der Fig. 4 und 5 ist der Rahmen 1 vertikal verschieblich über einer Auflage 40 abgestützt. Die vertikale, höhenverschiebliche Abstützung 41 wird durch Führungslaschen 42 an den Schmalseiten des Rahmens 1 gebildet, die in Zwischenführungen 43 geführt sind, die wiederum in Taschen 44 geführt sind, die in der Auflage 40 ausgebildet sind. Die Taschen 44 erstrecken sich von der Oberseite der Auflage 40 nach unten, so daß die Außenseite der Taschen 44 jeweils einen sich entlang der Schmalseite der Auflage 40 erstreckenden Fuß 45 bildet. An beiden Enden jedes Fußes 45 sind Gummistopper angebracht, die verhindern, daß sich die Auflage 40 mit dem daraufliegenden Butterstück auf dem Tisch oder der sonstigen Unterlage verrutscht, wenn eine dünne Butterscheibe abgenommen wird. Durch die teleskopartig arbeitende Abstützung 41 ergibt sich ein sehr großer Bereich des Abstandes des Rahmens 1 über der Auflage 40 bei insgesamt relativ kleinen Abmessungen der Führungslaschen 42, der Zwischenführung 43 und der Taschen 44 in vertikaler Richtung, so daß die erfindungsgemäße Lehre keine wesentlich größeren Abmessungen als eine herkömmliche Butterdose hat.

Wie man in Fig. 5 erkennt, haben die Führungslaschen 42 insgesamt Portalform mit einem waagrechten Teil 49, an dessen seitlichen Enden senkrechte Teile 50 nach unten führen. Am unteren Ende der senkrechten Teile 50 sind nach außen zeigende Nasen 51 angeformt, die verhindern, daß sich die Führungslaschen 42 von den Zwischenführungen 43 im normalen Gebrauch lösen. Bei der Montage werden die unteren Enden der senkrechten Teile 50 etwas zusammengedrückt, damit die Führungslaschen 42 von oben in die Zwischenführungen 43 eingesetzt werden können. Durch die Portalform der Führungslaschen 42 besteht dazu eine ausreichende Biegsamkeit. Die Zwischenführungen 43 sind lose in den Taschen 44 geführt und können herausgezogen werden. Zum Auflegen eines Butterstückes auf die Auflage 40 kann der gesamte Rahmen 1 mit den daranhängenden Führungslaschen 42 und den Zwischenführungen 43 nach oben von der Auflage 40 abgenommen werden. Die waagrechten Teile 49 der Führungslaschen 42 werden an ihrer oberen Kante von den kurzen Seiten 5 des Rahmens 1 durchdrungen und die Führungsdrähte 2 sind über die Oberseite der Führungslaschen 42 geführt und an ihnen entlang rechtwinklig nach unten umgebogen und ein Stück nach unten geführt und dann in dem Material der Führungslaschen 42 verankert. Bei der Herstellung werden die Führungsdrähte 2 an ihren Enden zunächst abgewinkelt und erst dann auf die Führungslaschen 42 aufgesetzt. Zur Verankerung in dem Material der Führungslaschen 42 werden sie vorzugsweise durch Ultraschall eingeschweißt. In dem abgewinkelten Bereich können die Führungsdrähte 2 profiliert, z.B. gewellt, sein, um eine zuverlässige Verankerung zu erzielen. Es besteht auch die Möglichkeit, die abgwinkelten Enden der Führungsdrähte 2 bei der Herstellung der Führungslaschen 42 in diese einzuspritzen.

Wie bei dem Ausführungsbeispiel von Fig. 1 sind die langen Seiten 6 des Rahmens 1 in der Mitte bei 32 leicht geknickt. Dadurch wird zum einen die Spannung der Führungsdrähte 2 aufrechterhalten und zum anderen eine ausreichende Freiheit für die Führung des Messers über die Führungsdrähte 2 erzielt, so daß die Bewegung des Messers nicht durch die langen Seiten 6 des Rahmens 1 behindert wird. Die Fläche 46 der Auflage 40 ist parallel zu den langen Seiten 6 ebenfalls in der Mitte etwas geknickt, damit die Butter restlos von der Auflage 40 abgenommen werden kann. Damit das auf der Auflage 40 ruhende Butterstück nicht durch die Bewegung des Messers auf der Auflage 40 verschoben wird, sind an den Enden der Fläche 46 im Profil wiederhakenähnliche Stufen 47 vorgesehen. Die gesamte Fläche 46 ist erhaben gegenüber einem umlaufenden Rand 52, wobei die Breite der erhabenen Fläche 46 der eines handelsüblichen Butterstückes und der Abstand der Stufen 47 der Länge eines handelsüblichen Butterstückes entspricht. Der Rand 52 kann parallel zu der erhabenen Fläche 46 zur Mitte hin abgesenkt sein.

Die Auflage 40, die Führungslaschen 42 und die Zwischenlaschen 43 werden zweckmäßig aus lebensmittelechtem und spülmaschinenfestem Kunststoff, z.B. ABS, hergestellt. Zweckmäßig wird die erfindungsgemäße Lehre zum Butterschneiden noch durch eine Abdeckhaube vervollständigt, deren unterer Rand an dem Rand 52 der Auflage 40 anliegt.

Die erfindungsgemäße Lehre zum Butterschneiden kann aus Edelstahl, Glas oder einem anderen Material hergestellt werden, wobei dann jeweils eine auf das Material abestimmte Formgebung notwendig ist.

## Patentansprüche

1. Lehre zum Butterschneiden, gekennzeichnet durch einen Rahmen (1), über den mindestens ein Führungsdraht (2) gespannt ist.

2. Lehre nach Anspruch 1, dadurch gekennzeichnet, daß über den Rahmen (1) zwei oder drei Führungsdrähte (2) und mindestens ein quer dazu verlaufender Draht (3) gespannt sind.

3. Lehre nach Anspruch 1 oder 2, dadurch gekennzeichnet, daß der Rahmen (1) rechteckförmig mit zwei kurzen Seiten (5) und zwei langen Seiten (6) ist und daß Griffe (4) nach oben aus der Rahmenebene abstehen.

4. Lehre nach einem der Ansprüche 1 bis 3, dadurch gekennzeichnet, daß die langen Seiten (6) des Rahmens (1) geknickt oder bogenförmig sind und unter Spannung durch die Führungsrähte (2) stehen.

5. Lehre nach Anspruch 3 oder 4, dadurch gekennzeichnet, daß die kurzen Seiten (5) zur Bildung der Griffe (4) gekröpft oder torartig abgesetzt sind und daß zur Bildung der Führungsdrähte (2) ein Draht um die senkrechten Teile (7) der beiden Griffe (4) gespannt ist und die Enden des Drahtes verbunden sind, wobei ein mittlerer Führungsdraht (2) zwischen den die Abkröpfungen überspannenden Teilen des Drahtes gespannt ist.

6. Lehre nach Anspruch 1, gekennzeichnet durch ein Gestell (20), in dem eine Butterauflage (23) höhenverschiebbar und nach oben vorgespannt ist, wobei auf der Oberseite des Gestelles (20) der Rahmen (1) angeordnet ist.

7. Lehre nach Anspruch 6, gekennzeichnet durch eine Ummantelung (30) und eine Abdeckung (31), wobei sich in der Ummantelung (30) Kältespeicher befinden.

8. Lehre nach Anspruch 1, gekennzeichnet durch eine Auflage (40) für das Butterstück und eine höhenverstellbare Abstützung (41) des Rahmens (1) über der Auflage (40).

9. Lehre nach Anspruch 8, dadurch gekennzeichnet, daß die Abstützung (41) durch nach unten zeigende Führungslaschen (42) an den kurzen Seiten (5) des Rahmens (1) gebildet wird, die in Zwischenführungen (43) geführt sind, die wiederum in Taschen (44) der Auflage (40) geführt sind.
